# DEMANDE DE BREVET EUROPEEN

(11) **EP 1 712 391 A2**
(43) Date de publication de la demande: **18.10.2006**
(21) Numéro de dépôt: 06290588.0
(22) Date de dépôt: 11.04.2006
(51) Int. Cl.: B60J 7/22

(54) **Structure aerodynamique anti-turbulences d'air et véhicule convertible ainsi équipé**

(30) Priorité: 12.04.2005 FR 0503646
(71) Demandeur: Heuliez, 79142 Cerizay Cedex (FR)
(72) Inventeur: Guillez, Jean-Marc, 79140 Cirières (FR); Queveau, Paul, 79140 Montravers (FR); Queveau, Gérard, 79140 Le Pin (FR)
(74) Mandataire: Pichat, Thierry

(57) **Abrégé**

Il s'agit de limiter des turbulences d'air vis-à-vis d'au moins un passager assis sur une rangée arrière (9) de sièges d'un véhicule. Pour cela, on dispose une structure aérodynamique (15) sur le véhicule, sensiblement au-dessus d'une zone (16) de l'habitacle (7), dans une position active d'utilisation, et on détermine ou on règle cette structure aérodynamique par rapport à la caisse (3) du véhicule pour stabiliser le flux d'air au voisinage de la tête de ces passagers.

## Description

Est ici traitée l'utilisation d'une structure aérodynamique pour un véhicule pourvu d'un habitacle au moins temporairement découvert.

Il s'agit favorablement d'un véhicule convertible, en particulier d'un véhicule à toit rétractable.

Sur de tels véhicules, on rencontre des zones de turbulences ou de remous gênants.

Pour limiter ces turbulences d'air pour des passagers assis sur des sièges arrière, il est connu de pourvoir le véhicule d'au moins un aileron présentant un extrados et un intrados que l'on dispose au-dessus d'une zone d'habitacle.

Il ne s'agit toutefois pas là d'une solution optimale en termes d'efficacité et/ou d'ergonomie ou de facilité d'installation sur le véhicule.

Pour viser tout ou partie de ces effets, une solution ici proposée consiste à (pré)déterminer ou régler la forme et/ou la position dans l'espace et/ou l'inclinaison de l'aileron par rapport à la caisse du véhicule pour assurer un rapport de pressions entre l'extrados et l'intrados qui stabilise le flux d'air au voisinage de la tête des passagers arrière.

Ainsi, on pourra (pré)déterminer ou régler l'une au moins parmi ces forme, position... pour, alors que le flux d'air circule, tendre vers une forme d'équilibre de pression entre l'extrados et l'intrados permettant de stabiliser les remous pour les passagers, sous l'aileron. Cette tendance vers un rapport équilibré des pressions permettra, par la différence existant entre la pression à l'extrados et celle à l'intrados, de régler la vitesse d'écoulement de l'air au-dessus de l'aileron par rapport à celle en dessous où l'air sera ralenti, d'où une diminution des remous pour les passagers arrière visés.

La position et/ou la forme, particulièrement la courbure extérieure, et/ou l'orientation de la structure aérodynamique sera ainsi déterminée de manière à gérer les turbulences et à minimiser celles-ci et les remous dans la zone des têtes des occupants concernés.

La zone, ci-après 16, optimum d'effet de 1'/des ailerons débutera typiquement sensiblement au niveau du début des principales turbulences (vers l'arrière des sièges avant). Plus à l'arrière, elle se rapprochera favorablement du bas des têtes, particulièrement donc celles des occupants assis sur les sièges arrière.

Pour favoriser une solution optimisée vis-à-vis des problèmes et inconvénients énoncés ci-avant, on conseille de satisfaire en outre à tout ou partie des caractéristiques des revendications jointes.

Le réglage de la structure aérodynamique sur le véhicule pourra être asservi à différents paramètres, tels particulièrement que la vitesse du véhicule, le bruit dans l'habitacle ou par mesure de pression(s).

Concernant la structure aérodynamique en tant que telle, il est conseillé qu'elle comprenne :
- au moins un aileron,
- des moyens prévus pour être situés en partie médiane du véhicule, transversalement à l'axe longitudinal, pour guider en déplacement cet aileron,
- des moyens pour orienter cet aileron et/ou des moyens pour faire varier sa forme,
- et des moyens de fixation pour fixer lesdits moyens de guidage de l'aileron sur le véhicule, en permettant de les positionner ainsi.

Favorablement, pour conjuguer facilité de montage sur le véhicule, contraintes aérodynamiques, fabrication en série, fiabilité, on conseille en outre que les moyens de guidage et les moyens d'orientation comprennent respectivement :
- des glissières arquées pour déplacer l'aileron qui sera alors monté coulissant le long de ces glissières,
- et des moyens de pivotement pour faire tourner l'aileron par rapport aux glissières.

Ci-après, on détaille une forme préférée de réalisation de la structure aérodynamique ici présentée, en référence aux dessins annexés fournis à titre d'exemple et dans lesquels :
- la figure 1 présente l'art antérieur,
- sur la coupe longitudinale médiane (axe X) de la figure 2, la structure aérodynamique est en place et le véhicule est donc conforme à l'invention ;
- figure 3, on voit une perspective en hauteur de l'arrière de l'habitacle du véhicule de la fig.2 ;
- figure 4, on retrouve agrandie la coupe de la fig.2 et la structure aérodynamique est montrée dans diverses positions (traits pleins et mixtes) ;
- figures 5,6 et 9, la coupe longitudinale médiane montre trois variantes d'ailerons,
- les figures 7 et 8 schématisent l'utilisation de capteurs de pression pour adapter les configurations d'aileron,
- et les figures 10, 11 et 12 montre deux ailerons de dessus, de part et d'autre de l'axe X.

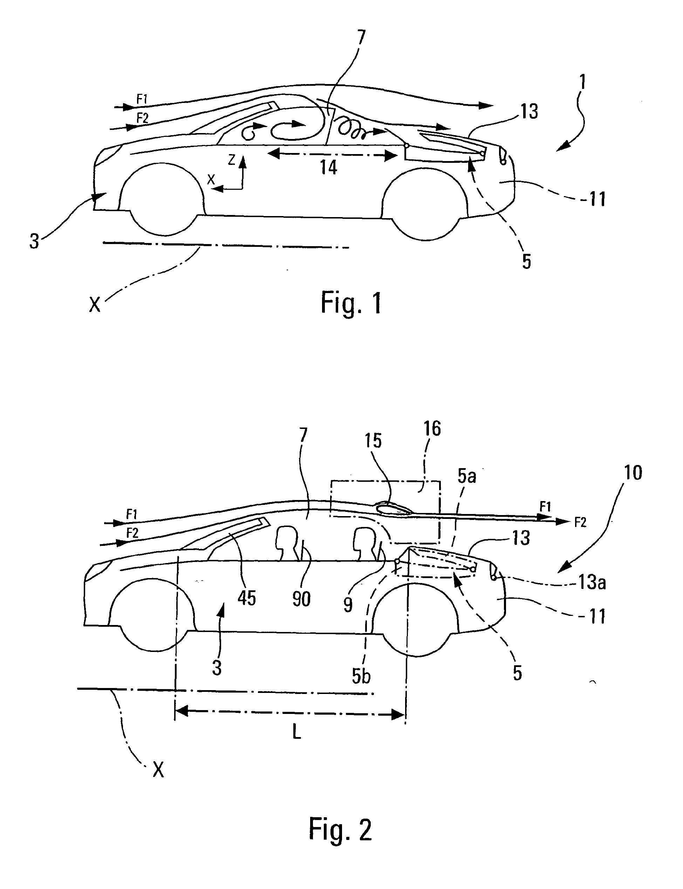

Figures 1 et 2 notamment, on voit un véhicule convertible comprenant une caisse 3 et un toit ouvrant 5. Le toit 5 est mobile par rapport à la caisse 3 pour dégager l'habitacle 7 et l'ouvrir sur l'extérieur, comme dans un cabriolet.

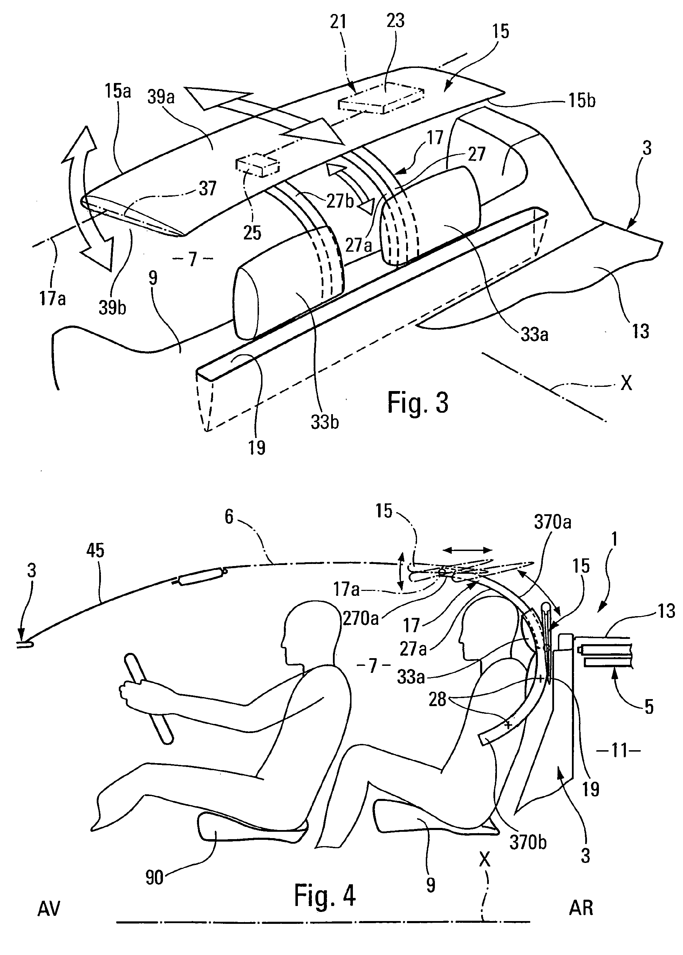

Le toit 5 est ici mobile entre une position avant (AV) le recouvrement de l'habitacle 7 (voir emplacement schématisé par la ligne 6 en traits mixtes fig.3), et une position arrière (AR) dans laquelle le toit est plié derrière les sièges arrière 9 et dégage donc le dessus de cet habitacle. Il peut alors être logé dans le coffre arrière 11 du véhicule, sous le capot 13 de recouvrement du coffre, comme schématisé figs.1 à 3.

Le capot 13 est articulé par rapport à la caisse, de préférence au moins à l'arrière, en 13a fig.2, pour s'ouvrir de l'avant vers l'arrière afin de permettre au toit de rentrer et sortir du coffre.

Le toit 5 peut être articulé à la caisse 3 par l'intermédiaire de bras articulés et de glissières.

Le toit comprend plusieurs éléments de toit, tel un panneau de toit avant 5a et un élément de toit arrière 5b, articulés entre eux.

Figure 1, le véhicule 1 de l'art antérieur, montré donc en position découverte, n'est pas équipé de structure aérodynamique. Des remous apparaissent dans l'habitacle, dans la zone de remous 14, et aux places arrière.

Figure 2, une structure aérodynamique 15 est en place sur le véhicule convertible 10. En traits mixtes, on voit la zone de positionnement privilégié de cette structure aérodynamique, zone 16. Véhicule en mouvement, les filets d'air F2 filent comme les filets F1.

Les occupants des places arrière 9 bénéficient de l'effet de l'aileron 15.

Celui-ci présente un bord d'attaque frontal renflé 15a, un bord de fuite 15b plus effilé, une corde 37 joignant les deux, un extrados 39a et un intrados 39b (fig.3). De façon préférée, il est mobile par rapport à la caisse 3 pour pouvoir ainsi être soit placé entre les deux rangées de sièges et alors globalement au-dessus des têtes des occupants, en particulier ceux des places arrière, soit être disposé derrière, en position inactive.

Dans ce but, la structure aérodynamique 15 est ici liée à des moyens 17 de déplacement lui permettant d'être fixé derrière l'habitacle tout en demeurant rapidement déployable vers l'avant.

En position inactive, la structure aérodynamique est ici logée juste derrière les sièges arrière, dans une cavité de rangement 19 située transversalement, devant le capot du coffre 11 ; voir figures 3 et 4 où la cavité 19 est une fente verticale ou sensiblement verticale.

La structure aérodynamique 15 est alors basculée à la verticale ou dans une position proche. En position active d'utilisation, elle occupe par contre une orientation plus proche de l'horizontale.

Pour basculer ainsi, l'aileron illustré est reliée à des moyens 21 d'orientation qui lui permettent de pivoter autour d'un axe 17a perpendiculaire à l'axe longitudinal X du véhicule. Ces moyens d'orientation 21 peuvent comprendre une motorisation 23 commandant un système d'actionnement 25 à vérin ou à engrènement, tel qu'un système pignons-crémaillère (fig.3).

Les moyens 17 de déplacement comprennent des moyens de guidage 27 présentant favorablement une courbure qui s'enroule, depuis l'arrière, dans un plan vertical du véhicule et suivant l'axe longitudinal X, autour d'une partie de la tête des passagers arrière normalement assis.

Des moyens 28 de fixation (fig.4), tels que des vis pour un système télescopique, permettent de fixer les moyens de guidage 27 au véhicule.

Avec la solution figures 3 et 4, on peut déplacer la structure 15 sur le dispositif 27 selon au moins une courbure s'enroulant des environs du bas et de l'arrière de la tête des passagers arrière (tel que 31), jusque vers l'avant, sensiblement au-dessus de ces têtes.

Figures 3 et 4, les moyens 17 de déplacement comprennent donc des glissières arquées repérées 27a, 27b fig.3. Il s'agit ici de deux glissières disposées, transversalement à l'axe X, en partie médiane du véhicule, de part et d'autre de l'axe X et, le long de cet axe, entre les places arrière 9, et une zone intermédiaire entre les places avant 90 et arrière 9. Une seule glissière, éventuellement centrale, conviendrait.

L'aileron 15 coulisse de façon télescopique (parties 370a, 370b) le long des deux glissières et/ou se déplace avec elles entre les positions déployée (figure 3) et rangée (trait plein figure 4) dans laquelle la fixation apparaît derrière ou au niveau des appuis-tête (33a, 33b, fig.3).

En position inactive, les glissières peuvent être escamotées et la structure 15 peut être disposée verticalement dans la cavité 19 (fig.3), évitant une prise au vent.

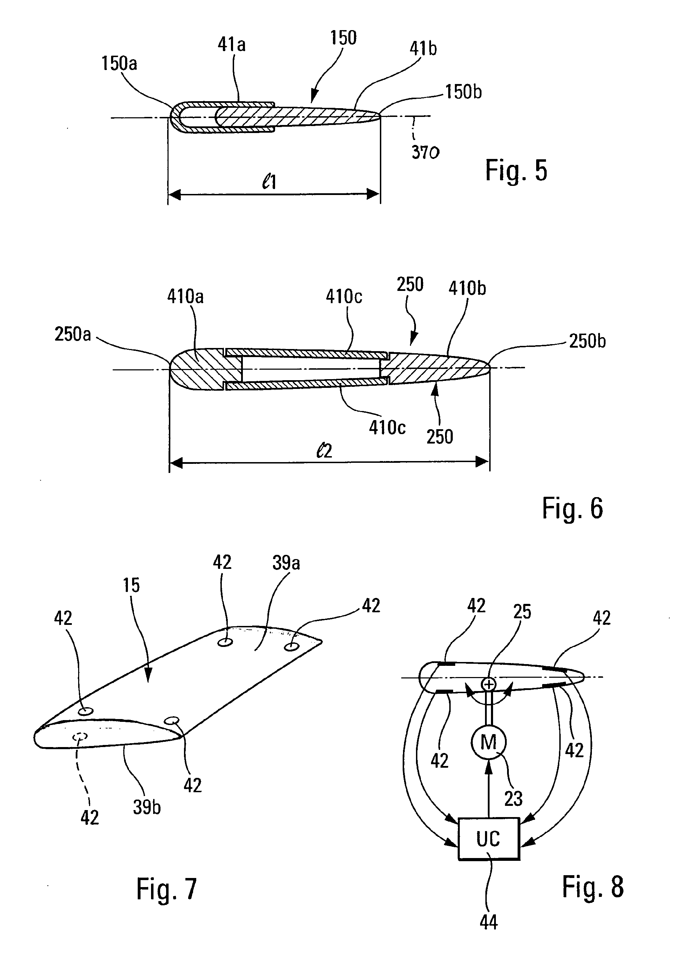

Figure 5, le bord d'attaque 150a appartient à une partie avant 41a de l'aileron, ici repéré 150, par rapport à laquelle coulisse, ici de manière télescopique et suivant la corde 370, une partie arrière 41b à laquelle appartient le bord de fuite 150b.

Ceci fait varier la longueur 11 de la corde de l'aileron et modifie son profil : forme et/ou longueur à l'extrados et à l'intrados. L'adaptation de ce profil s'obtiendra favorablement par une motorisation et des moyens d'actionnement permettant d'écarter ou de rapprocher les parties 41a, 41b, suivant l'axe X.

Figure 6, on retrouve deux parties rigides respectivement avant et aval 410a, 410b intégrant respectivement les bords d'attaque 250a et de fuite 250b. Entre elles, s'étend périphériquement une partie intermédiaire 410c déformable, en particulier extensible en largeur, pour faire varier la corde 12 de la structure aérodynamique 250 illustrée.

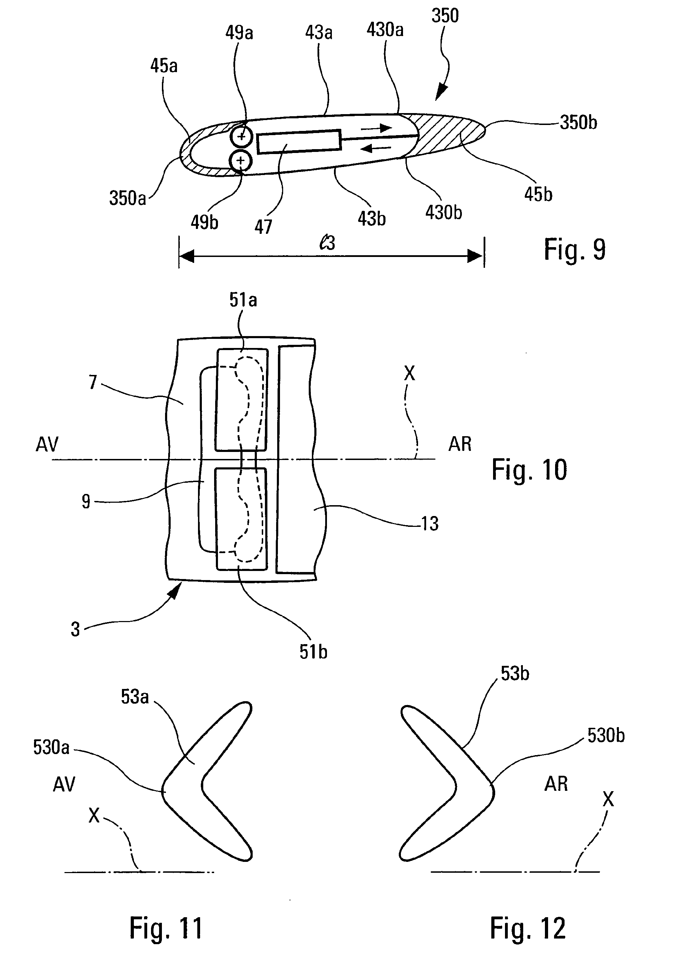

Figure 9, des structures ou matériaux enroulables 43a,43b sont tendues à l'extrados et à l'intrados, entre les parties amont et aval rigides 45a,45b auxquelles appartiennent respectivement le bord d'attaque 350a et le bord de fuite 350b. Quand la corde 13 est à faire varier, on manoeuvre un vérin 47 fixé à l'intérieur de l'aileron 350, pour rapprocher ou éloigner entre elles les parties 45a,45b suivant cette corde, et on enroule ou déroule en conséquence les structures 43a,43b dont une extrémité (ici 430a,430b) est fixée à l'une des parties 45a,45b (ici 45b), l'autre s'enroulant ou se déroulant autour des rouleaux intérieurs 49a,49b.

Plutôt qu'un positionnement prédéterminé, on pourra préférer régler l'aileron alors que le véhicule roule en asservissant son positionnement sur le véhicule, et/ou son inclinaison par rapport à la caisse 3 et/ou sa forme : courbure extrados, intrados, longueur suivant la corde.

Pour l'asservissement, des mesures de pression seront fournies via des capteurs de pression tels que 42 figure 7 disposés à différents endroits sur l'extrados et l'intrados, de préférence vers l'avant et vers l'arrière, relativement à proximité des bords d'attaque et de fuite. Les pressions mesurées seront analysées dans une unité de calcul 44 (fig.8) qui réglera la position longitudinale (axe X), l'inclinaison par rapport à la caisse 3 et/ou la longueur de la corde, de manière à atteindre le rapport précité de pressions extrados (Pext)/intrados (Pint) « tendant vers l'équilibre », stabilisateur du flux d'air en dessous, au voisinage de la tête des passagers arrière. Le profil pourra être plus courbé à l'extrados qu'à l'intrados, d'où une possible légère portance sur l'aileron (extrados) et un ralentissement de l'écoulement de l'air dessous.

La valeur de ce rapport Pext/Pint sera inférieure à un et pourra en particulier être comprise entre 0,8 et
1. Elle dépendra particulièrement de la forme du véhicule.

Si on choisit de ne pas recourir à un l'asservissement, on pourra assurer le ou les réglages à partir de données pré-enregistrées, suite à des essais menés sur banc-tests, dans des situations de référence.

Concernant le paramètre relatif au profil aérodynamique du véhicule utilisé favorablement pour la détermination ou le réglage de l'aileron, il dépend de l'inclinaison du pare-brise 45 et/ou de la longueur L de l'habitacle suivant l'axe longitudinal X du véhicule et/ou du capot 13 du coffre arrière 11 ,si le véhicule en est pourvu, comme sur la figure 2.

Fig.10, on voit deux ailerons 51a,51b côte à côte, de part et d'autre de l'axe X, allongés (éventuellement non coaxialement, suivant le réglage) perpendiculairement à cet axe X. Ils peuvent être mobiles ensemble ou indépendamment.

Figs.11 et 12, on voit deux autres formes d'ailerons. Celui 53a est en forme de boomerang avec sa pointe 530a dirigée vers l'avant (AV), coaxialement ou parallèlement à l'axe x du véhicule. L'autre, 53b, a sa pointe 530b dirigée vers l'arrière (AR). Telle pourrait être la forme des ailerons de la fig.10 ou celle de celui de l'une quelconque des figures 2 à 9.

## Revendications

1. Procédé pour limiter, sur un véhicule pourvu d'une caisse et d'un habitacle découvert, des turbulences d'air pour un passager assis sur une rangée arrière (9) de sièges située derrière une rangée avant (90) de sièges, dans lequel procédé on pourvoit le véhicule d'au moins un aileron (15, 150, 250, 350, 51a, 51b, 53a, 53b) présentant un extrados (39a) et un intrados (39b) que l'on dispose au-dessus d'une zone (16) de l'habitacle (7), **caractérisé en ce qu'**on (pré)détermine ou on règle la forme et/ou la position dans l'espace et/ou l'inclinaison de l'aileron par rapport à la caisse (3) du véhicule pour assurer un rapport de pressions entre l'extrados et l'intrados qui stabilise le flux d'air au voisinage de la tête dudit passager arrière (31).

2. Procédé selon la revendication 1, **caractérisé en ce qu'**alors que le flux d'air circule pendant que le véhicule roule, on règle l'une au moins parmi ladite forme, la position dans l'espace et l'inclinaison de cet aileron pour stabiliser ledit flux d'air en dessous et derrière l'aileron.

3. Procédé selon la revendication 1 ou la revendication 2, **caractérisé en ce qu'**on effectue lesdits réglages de la structure aérodynamique à partir de données de pressions qui sont pré-enregistrées, suite à des essais menés sur banc-tests, dans des situations de référence, ou par asservissement, par l'intermédiaire de capteurs de pressions fournissant lesdites données alors que le flux d'air circule pendant que le véhicule roule.

4. Procédé selon l'une quelconque des revendications précédentes, **caractérisé en ce que** dans au moins une position active d'utilisation de l'aileron (15, 150, 250, 350, 51a, 51b, 53a, 53b), celui-ci est placé entre les rangés avant (90) et arrière (9) de sièges, par un moyen de guidage (17, 21, 27) lié au véhicule et s'étendant en partie médiane de ce véhicule, considérée transversalement à l'axe longitudinal (X).

5. Procédé selon l'une quelconque des revendications précédentes, **caractérisé en ce que** :
- pour prédéterminer ou régler la forme de l'aileron (15, 150, 250, 350), on réalise celui-ci avec une zone de bord d'attaque (150a,250a,45a) et une zone de bord de fuite (150b, 250b, 45b) rigides, reliées entre elles par un matériau déroulable et/ou enroulable, ou extensible (43a, 43b, 410c), ou par des parties (41a,41b) mobiles les unes par rapport aux autres suivant la corde (37, 11, 12) de l'aileron passant par lesdites zones de bord de fuite et de bord d'attaque,
- et/ou l'une au moins des caractéristiques de l'aileron (15, 150, 250, 350, 51a, 51b, 53a, 53b) parmi sa dite position sur le véhicule (10), son orientation par rapport au véhicule, sa forme, sa longueur suivant sa corde, est prédéterminée ou réglée en fonction de l'un au moins des paramètres suivants: vitesse du véhicule, bruit dans l'habitacle (7), mesure d'au moins une pression sur la structure aérodynamique et/ou dans ou au voisinage immédiat de cet habitacle, profil aérodynamique du véhicule.

6. Procédé selon la revendication 5, **caractérisé en ce qu'**on définit le paramètre de profil aérodynamique du véhicule en fonction de l'inclinaison du pare-brise (45) de ce véhicule et/ou de la longueur (L) de l'habitacle suivant l'axe longitudinal (X) du véhicule et/ou du profil d'un capot (13) de coffre arrière si le véhicule en est pourvu.

7. Procédé selon l'une quelconque des revendications précédentes, **caractérisé en ce qu'**on effectue des mesures de pression à différents endroits de l'extrados (39a) et/ou de l'intrados (39b) de la structure aérodynamique (15, 150, 250, 350, 51a, 51b, 53a, 53b) et on traite ces mesures de pression dans une unité de calcul (44) pour régler la position, et/ou l'inclinaison et/ou la longueur de la corde et/ou la forme de cette structure aérodynamique.

8. Structure aérodynamique équipant un véhicule pourvu d'une caisse, d'un habitacle découvert et de rangées avant et arrière de sièges, la structure aérodynamique comprenant :
- au moins un aileron (15, 150, 250, 350, 51a, 51b, 53a, 53b),
- des moyens (17, 27) situés en partie médiane du véhicule, transversalement à l'axe longitudinal (X), pour guider en déplacement cet aileron,
- des moyens (21, 27a, 27b) pour orienter cet aileron et/ou des moyens (41a, 41b, 410a, 410b, 410c) pour faire varier sa forme,
- et des moyens (38) de fixation pour fixer lesdits moyens (17, 27) de guidage de l'aileron sur le véhicule (10), en permettant de les positionner ainsi, transversalement, en partie médiane de ce dernier entre au moins une position avant située, suivant l'axe longitudinal (X) du véhicule, entre lesdites rangées avant (90) et arrière (9) de sièges, et une position arrière située plus à l'arrière.

9. Structure aérodynamique selon la revendication 8, **caractérisé en ce que** les moyens de guidage et les moyens d'orientation comprennent respectivement :
- des glissières arquées (27a, 27b) pour déplacer l'aileron qui est monté coulissant le long de ces glissières,
- et des moyens (17a, 23, 25) de pivotement pour faire tourner l'aileron par rapport aux glissières.

10. Véhicule sur lequel est mis en oeuvre le procédé selon l'une quelconque des revendications 1 à 7 et/ou équipé de la structure aérodynamique (15, 150, 250, 350, 51a, 51b, 53a, 53b) selon la revendication 8 ou 9.

11. Véhicule selon la revendication 10, **caractérisé en ce que** :
- les moyens de guidage (17, 27) comprennent un dispositif de guidage (27, 27a, 27b) présentant une courbure qui s'enroule, depuis l'arrière, dans un plan vertical du véhicule et suivant l'axe longitudinal (X) de celui-ci, autour d'une partie de la tête desdits passagers arrière normalement assis sur la rangée arrière (9) de sièges,
- et/ou les moyens de guidage (27, 27a, 27b), s'étendent, à l'arrière, en partie centrale, entre les places arrière de ladite rangée arrière (9) de sièges et, le long de l'axe longitudinal (X) du véhicule, de part et d'autre de cet axe.

12. Véhicule selon l'une des revendications 10 ou 11, **caractérisé en ce qu'**il comprend une cavité de rangement (19) située derrière le dossier de la rangée arrière (9) de sièges et/ou derrière les appui-têtes (33a, 33b), et dans laquelle la structure aérodynamique (15, 150, 250) est rangée, dans une position arrière.

13. Véhicule selon la revendication 12, **caractérisé en ce que** la structure aérodynamique (15, 150, 250) est rangée verticalement ou sensiblement verticalement dans ladite cavité de rangement (19) qui jouxte l'arrière de ladite rangée arrière (9) de sièges.
